# EUROPÄISCHE PATENTSCHRIFT

(11) **EP 0 932 339 B1**
(45) Veröffentlichungstag und Bekanntmachung des Hinweises auf die Patenterteilung: **10.04.2002**
(21) Anmeldenummer: 97909370.5
(22) Anmeldetag: 08.10.1997
(51) Int. Cl.: A01N 25/14, A01N 25/26

(54) **FESTES PFLANZENSCHUTZMITTEL**
SOLID PHYTOSANITARY AGENT
AGENT PHYTOSANITAIRE SOLIDE

(30) Priorität: 11.10.1996 DE 19641939; 17.10.1996 DE 19642879
(43) Veröffentlichungstag der Anmeldung: 04.08.1999
(73) Patentinhaber: BASF AKTIENGESELLSCHAFT, 67056 Ludwigshafen (DE)
(72) Erfinder: RUNGE, Frank, D-67133 Maxdorf (DE); ZWISSLER, Georg, Konrad, D-67098 Bad Dürkheim (DE); HORN, Dieter, D-69120 Heidelberg (DE); END, Lutz, D-68199 Mannheim (DE); KOBER, Reiner, D-67136 Fu gönheim (DE); SCHNEIDER, Karl-Heinrich, D-67271 Kleinkarlbach (DE); STADLER, Reinhold, D-67489 Kirrweiler (DE); ZIEGLER, Hans, D-67112 Mutterstadt (DE); RADEMACHER, Wilhelm, D-67117 Limburgerhof (DE); SCHMIDT, Oskar, D-67105 Schifferstadt (DE); HARRIES, Volker, D-67227 Frankenthal (DE); SAUR, Reinhold, D-67459 Böhl-Iggelheim (DE)
(86) Internationale Anmeldenummer: EP9705535
(87) Internationale Veröffentlichungsnummer: WO9816105

(56) Entgegenhaltungen:
- EP-A- 0 065 193
- EP-A- 0 498 332
- WO-A-95/03356
- DE-A- 2 805 106
- DATABASE WPI Derwent Publications Ltd., London, GB; AN 86-011602 XP002053975 HOKKO CHEM IND CO LTD: " Granular agricultural chemical compsn. with reduced cutaneous toxicity - comprises O-ethyl-S,S-di:propyl-phosphoro-di: thioate coated with water soluble polymer" & JP 60 237 007 A

## Beschreibung

Die vorliegende Erfindung betrifft feste Pflanzenschutzmittel aus einem oder mehreren überwiegend amorphen, an sich festen Pflanzenschutzmitteln mit einer Wasserlöslichkeit von weniger als 500 mg/l bei 25°C und einer diese Wirkstoffe umgebenden Hüllschicht.

Weiterhin betrifft die Erfindung Verfahren zur Bekämpfung von unerwünschtem Pflanzenwuchs, zur Bekämpfung von pflanzlichen und tierischen Schädlingen und zur Regulierung des Pflanzenwachstums mit den erfindungsgemäßen Mitteln sowie ein Verfahren zur Herstellung der erfindungsgemäßen Mittel.

Zur Herstellung von Suspensionen an sich fester Pflanzenschutz-Wirkstoffe geht man häufig von festen - beispielsweise pulver- oder granulatförmigen - Formulierungen der Pflanzenschutz-Wirkstoffe aus und mischt diese mit einem geeigneten Lösungsmittel, vor allem mit Wasser. In den hierfür gebräuchlichen festen Formulierungen liegen die Pflanzenschutz-Wirkstoffe überwiegend in kristalliner Form vor.

Aus der EP-A 65 193 ist ein Verfahren zur Umhüllung von Carotinoiden bekannt, bei dem man das Carotinoid löst, aus dieser Lösung durch schnelles Mischen mit einer wäßrigen Lösung eines quellbaren Kolloids das Carotinoid in kolloid-disperser Form ausfällt und die erhaltene Dispersion in an sich bekannter Weise von dem Lösungsmittel und dem Dispergiermedium befreit.

Aus der US-A 5 133 908 ist bekannt, Nanopartikel - d.h. Partikel mit einem mittleren Durchmesser im Nanometer-Bereich - als Träger für Wirkstoffe zu verwenden und gegebenenfalls mittels Lyophilisierung zu trocknen. Dabei erfolgt die Herstellung in einem Verfahren bei niedriger Temperatur, niedrigem Druck und bei geringem oder keinem Rühren. Hinsichtlich ihrer Stabilität und Anwendungseigenschaften können diese bekannten Produkte im Pflanzenschutzbereich noch nicht befriedigen.

Der vorliegenden Erfindung lag daher die Aufgabe zugrunde, eine nanopartikuläre Formulierung für feste Pflanzenschutz-Wirkstoffe bereitzustellen, welche sich besser für die Herstellung von im Pflanzenschutz verwendbaren Flüssigformulierungen eignet und insbesondere zu einer Wirkungssteigerung der derart formulierten Pflanzenschutz-Wirkstoffe führt.

Als zu verbessernde Produkteigenschaften sind zu nennen:
- die Auflösungsgeschwindigkeit und die Löslichkeit der Mittel in den landwirtschaftlich bedeutsamen Lösungsmitteln,
- die Verringerung der Aufwandmengen der Pflanzenschutz-Wirkstoffe,
- eine verlängerte Wirkungsdauer der formulierten Pflanzenschutz-Wirkstoffe,
- eine erhöhte Anfangswirkung des formulierten Pflanzenschutz-Wirkstoffs.

Demgemäß wurde die eingangs definierten Mittel gefunden.

Ferner wurden die eingangs definierten Verfahren unter Verwendung dieser Mittel gefunden.

Als Pflanzenschutz-Wirkstoffe im Sinne der vorliegenden Erfindung kommen vorzugsweise solche Pflanzenschutz-Wirkstoffe oder deren Mischungen mit einer Wasserlöslichkeit von weniger als 100, und insbesondere von weniger als 10 mg/l, jeweils bei einer Temperatur von 25°C, in Betracht.

Die Pflanzenschutz-Wirkstoffe können gleichermaßen gegen Schadpilze und tierische Schädlinge in Landwirtschaft und Holzschutz oder gegen unerwünschten Pflanzenwuchs wirksam sein oder wachstumsregulatorischen Eigenschaften haben.

Im einzelnen eignen sich folgende Pflanzenschutz-Wirkstoffe oder deren Mischungen (ihre Bezeichnung entspricht - sofern nicht die rationelle chemische Nomenklatur verwendet wurde - derjenigen in "The Pesticide Manual", The British Crop Protection Council, 10th Edition, London):

Fungizide:
Dithiocarbamate und deren Derivate wie Ferridimethyldithiocarbamat, Zinkbisdimethyldithiocarbamat, Zinkethylenbisdithiocarbamat, Manganethylenbisdithiocarbamat, Mangan-Zink-ethylen-bis-dithiocarbamat, Tetramethylthiuramdisulfide, Zink-ethylenbis-dithiocarbamat-Polymer, Ammoniak-Komplex von Zink-(N,N-ethylen-bis-dithiocarbamat), Ammoniak-Komplex von Zink-(N,N'-propylen-bis-dithiocarbamat), Zink-(N,N'-propylen-bis-dithiocarbamat)-Polymer, N,N'-Polypropylen-bis-(thiocarbamoyl)disulfid;
Nitroderivate wie Dinitro-(1-methylheptyl)phenylcrotonat, 2-sec.-Butyl-4,6-dinitrophenyl-3,3-dimethylacrylat, 5-Nitro-iso-phthalsäure-di-iso-propylester;
heterocyclische Substanzen wie 2,4-Dichlor-6-(o-chloranilino)-s-triazin, 2,3-Dicyano-1,4-dithioanthrachinon, 1-(Butylcarbamoyl)-2-benzimidazol-carbaminsäuremethylester, 2-Methoxycarbonylamino-benzimidazol, 2-(Furyl-(2))benzimidazol, 2-(Thiazolyl-(4))benzimidazol, N-(1,1,2,2-Tetrachlorethylthio)tetrahydrophthalimid, N-Trichlormethylthio-tetrahydrophthalimid, N-Trichlor-methylthio-phthalimid,
N-Dichlorfluormethylthio-N',N'-dimethyl-N-phenyl-schwefelsäurediamid, 5-Ethoxy-3-trichlormethyl-1,2,3-thiadiazol, 2-Rhodanmethylthiobenzthiazol, 1,4-Dichlor-2,5-dimethoxybenzol, 8-Hydroxychinolin bzw. dessen Kupfersalz, 2,3-Dihydro-5-carboxanilido-6-methyl-1,4-oxathiin, 2-Methyl-furan-3-carbonsäureanilid, 2-Methyl-benzoesäure-anilid, N-Formyl-N-morpholin-2,2,2-trichlorethylacetal, Piperazin-1,4-diylbis-(1-(2,2,2-trichlor-ethyl)formamid, 2,6-Dimethyl-N-tridecyl-morpholin bzw. dessen Salze, 2,6-Dimethyl-N-cyclododecyl-morpholin bzw. dessen Salze, N-[3-(p-tert.-Butylphenyl)-2-methylpropyl]-cis-2,6-dimethylmorpholin, 1-[2-(2,4-Dichlorphenyl)-4-n-propyl-1,3-dioxolan-2-ylmethyl]-1H-1,2,4-triazol, N-(n-Propyl)-N-(2,4,6-trichlor-phenoxyethyl)-N'-imidazol-yl-harnstoff, 1-(4-Chlorphenoxy)-3,3-dimethyl-1-(1H-1,2,4-triazol-1-yl)-2-butanon, (2-Chlorphenyl)-(4-chlorphenyl)-5-pyrimidin-methanol, Bis-(p-chlorphenyl)-3-pyridinmethanol, 1,2-Bis-(3-ethoxycarbonyl-2-thioureido)benzol, 1,2-Bis-3-methoxycarbonyl-2-thioureido)benzol, [2-(4-Chlorphenyl)ethyl]-(1,1-dimethylethyl)-1H-1,2,4-triazol-1-ethanol sowie
verschiedene Fungizide wie 3-[3-(3,5-Dimethyl-2-oxycyclohexyl)-2-hydroxyethyl)]glutarimid, Hexachlorbenzol, DL-Methyl-N-(2,6-dimethyl-phenyl)-N-furoyl(2)alaninat, N-(2,6-Dimethylphenyl)-N-chloracetyl-D,L-2-aminobutyrolacton, DL-N-(2,6-Dimethylphenyl)-N-(phenylacetyl)alaninmethylester, 5-Methyl-5-vinyl-3-(3,5-dichlorphenyl)-2,4-dioxo-1,3-oxazolidin, 3-(3,5-Dichlorphenyl)-1-iso-propylcarbamoylhydantoin, N-(3,5-Dichlorphenyl)-1,2-dimethylcyclopropan-1,2-dicarbonsäureimid, 1-[2-(2,4-Dichlorphenyl)pentyl]-1H-1,2,4-triazol, 2,4-Difluor-a-(1H-1,2,4-triazolyl-1-methyl)benzhydrylalkohol, 1-((bis-(4-Fluorphenyl)methylsilyl)methyl)-1H-1,2,4-triazol, Strobilurine wie Methyl-E-methoximino-[a-(o-tolyloxy)-otolyl]acetat, Methyl-E-2-{2-[6-(2-cyanophenoxy)pyrimidin-4-yloxy]-phenyl}-3-methoxyacrylat, Methyl-E-methoximino-[a-(2-phenoxyphenyl)]acetamid, Methyl-E-methoximino-[a-(2,5-dimethylphenoxy)-o-tolyl]acetamid,
Anilinopyrimidine wie N-(4,6-Dimethylpyrimidin-2-yl)anilin, N-[4-Methyl-6-(1-propinyl)pyrimidin-2-yl]anilin,
Phenylpyrrole wie 4-(2,2-difluor-1,3-benzodioxol-4-yl)pyrrol-3-carbonitril,
Zimtsäureamide wie 3-(4-Chlorphenyl)-3-(3,4-dimethoxyphenyl)acrylsäuremorpholid,
(+)-cis-1-(4-Chlorphenyl)-2-(1H-1,2,4-triazol-1-yl)cycloheptanol, Methyl-(E)-2-{2-[6-(2-cyanophenoxy)pyrimidin-4-yloxy]phenyl}-3-methoxyacrylat und insbesondere die Azol-Wirkstoffe N-propyl-N-[2,4,6-trichlorophenoxy)ethyl]imidazol-1-carboxamid (Prochloraz), (Z)-2-(1,2,4,-Triazol-l-yl-methyl)-2-(4-fluorphenyl)-3-(2-chlorphenyl)-oxiran (Epoxiconazol), 1-Butyl-1-(2,4-dichlorphenyl)-2-(1,2,4-triazol-1-yl)-ethanol (Hexaconazol), 1-[(2-Chlorphenyl)methyl]-1-(1,1-dimethyl)-2-(1,2,4-triazol-1-yl-ethanol, 1-(4-Fluorphenyl)-1-(2-fluorphenyl)-2-(1,2,4-triazol-1-yl)ethanol (Flutriafol), (RS)-4-(4-Chlorphenyl)-2-phenyl-2-(1H-1,2,4-triazol-1-ylmethyl)-butyronitril, 1-[(2 RS, 4 RS; 2 RS, 4 SR)-4-Brom-2-(2,4-dichlorphenyl)-tetrahydrofurfuryl]-1H-1,2,4-triazol, (RS)-2,2-Dimethyl-3-(2-chlorbenzyl)-4-(1H-1,2,4-triazol-l-yl)-butan-3-ol, Bitertanol, Triadimefon, Triadimenol, Bromuconazol, Cyproconazol, Difenoconazol, Diniconazol, Imibenconazol, Propiconazol, Flusilazol, Tebuconazol, Imazalil, Penconazol, Tetraconazol, Metconazol, Fluquinconazol, Fenbuconazol, Triticonazol.

Bevorzugt werden als Azol-Wirkstoffe Prochloraz, Epoxiconazol, Hexaconazol, Cyproconazol, Difenoconazol, Propiconazol, Flusilazol, Diniconazol, Triticonazol und Tebuconazol, wobei Epoxiconazol mit besonderem Vorteil verwendet wird.

Die Wirkstoffe können auch in Form ihrer Salze oder Metallkomplexe vorliegen. Auch diese Mischungen werden von der Erfindung umfaßt.

Die Salze werden hergestellt durch Umsetzung mit Säuren, z.B. Halogenwasserstoffsäuren wie Fluorwasserstoffsäure, Chlorwasserstoffsäure, Bromwasserstoffsäure oder Jodwasserstoffsäure oder Schwefelsäure, Phosphorsäure, Salpetersäure oder organischen Säuren wie Essigsäure, Trifluoressigsäure, Trichloressigsäure, Propionsäure, Glycolsäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure oder 1,2-Naphthalindisulfonsäure.

Metallkomplexe können wahlweise nur eine Komponente (a) oder eine Komponente (b) oder auch mehrere Komponenten (a) oder (b) enthalten. Es lassen sich auch Metallkomplexe herstellen, die beide Komponenten (a) und (b) miteinander in einem gemischten Komplex enthalten.

Metallkomplexe werden hergestellt aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten der Metalle der zweiten Hauptgruppe wie Calcium und Magnesium und der dritten und vierten Hauptgruppe wie Aluminium, Zinn oder Blei sowie der ersten bis achten Nebengruppe wie Chrom, Mangan, Eisen, Kobalt, Nickel, Kupfer, Zink. Bevorzugt sind die Nebengruppen-Elemente der 4. Periode und insbesondere Kupfer. Die Metalle können dabei in den verschiedenen ihnen zukommenden Wertigkeiten vorliegen. Die Metallkomplexe können einen oder mehrere organische Molekülanteile als Liganden enthalten.

### Als herbizide Wirkstoffe seien erwähnt:

Thiadiazole :
Bromobutide, dimepiperate, diphenamid, etobenzanid (benzchlomet), flamprop-methyl, isoxaben, naptalame, pronamid (propyzamid), propanil,

Anilide:
anilofos, mefenacet
2,4-D, 2,4-DB, clomeprop, dichlorprop, dichlorprop-P, fluroxypyr, MCPB, napropamide, napropanilide, triclopyr,

Bleacher:
diflufenican, fluorochloridone, flupoxam, fluridone, pyrazolate, sulcotrione (chlormesulone),

Carbamate:
butylate, chlorpropham, cycloate, desmedipham, EPTC, esprocarb, molinate, orbencarb, pebulate, phenmedipham, propham, prosulfocarb, pyributicarb, thiobencarb (benthiocarb), thiocarbazil, triallate, vernolate,

Chinolinsäuren:
quinclorac, quinmerac,

Chloracetanilide:
acetochlor, alachlor, butachlor, butenachlor, metazachlor, metolachlor, pretilachlor, thenylchlor,

Cyclohexenone:
alloxydim, clethodim, cycloxydim, sethoxydim, tralkoxydim,

Dihydrobenzofuran:
ethofumesate,

Dihydrofuran-3-on:
flurtamone,

Dinitroaniline:
benefin, butralin, dinitramin, ethalfluralin, fluchloralin, oryzalin, pendimethalin, prodiamine, trifluralin,

Dinitrophenole:
bromofenoxim, dinoterb, DNOC,

Diphenylether:
acifluorfen-sodium, aclonifen, bifenox, chlornitrofen (CNP), ethoxyfen, fluoroglycofen-ethyl, fomesafen, lactofen, oxyfluorfen,

Harnstoff:
chlorbromuron, chlortoluron, cumyluron, dibenzyluron, dimefuron, diuron, dymron, fluometuron, isoproturon, linuron, methabenzthiazuron, metobenzuron, neburon, siduron,

Imidazolinone:
imazaquin,

Oxadiazole:
oxadiargyl, oxadiazon,

Oxiran:
tridiphane,

Phenole:
bromoxynil, ioxynil
Phenoxyphenoxypropionsäureester:
clodinafop, cyhalofop-butyl, diclofop-methyl, fenoxaprop-ethyl, fenoxaprop-p-ethyl, fenthiapropethyl, fluazifop-butyl, fluazifopp-butyl, haloxyfop-ethoxyethyl, haloxyfop-methyl, haloxyfopp-methyl, isoxapyrifop, propaquizafop, quizalofop-ethyl, quizalofop-p-ethyl, quizalofop-tefuryl

Phenylpropionsäure:
chlorophenprop-methyl,

ppi:
benzofenap, flumiclorac-pentyl, sulfentrazone,

Pyridazine:
chloridazon, norflurazon, pyridate,

Pyridincarbonsäuren:
dithiopyr, picloram, thiazopyr,

Pyrimidylether:
pyrithiobac-säure, KIH-6127,

Sulfonamide:
flumetsulam, metosulam,

Sulfonylharnstoffe:
amidosulfuron, azimsulfuron, bensulfuron-methyl, chlorimuronethyl, chlorsulfuron, cinosulfuron, cyclosulfamuron, ethametsulfuron methyl, flazasulfuron, halosulfuron-methyl, imazosulfuron, primisulfuron, prosulfuron, pyrazosulfuron-ethyl, rimsulfuron, sulfometuron-methyl, thifensulfuron-methyl, triasulfuron, triflusulfuron-methyl,

Triazine:
ametryn, atrazin, cyanazine, dimethamethryn, prometryn, propazin, simazin, simetryn, terbumeton, terbutryn, terbutylazin, trietazin,

Triazolcarboxamid:
triazofenamid,

Uracil:
lenacil,

Verschiedene:
benazolin, benfuresate, bensulide, butamifos, chlorthal-dimethyl (DCPA), cinmethylin, dichlobenil, fluorbentranil, mefluidide, piperophos
Geeignete insektizide und akarizide Pflanzenschutz-Wirkstoffe sind:
   Cyanophosphate wie Sulprofos, Chlorpyrifos, Phosalone, Pirimiphos-methyl, Fenitrothion, Phosmet, Azinophos-methyl, Profenofos und Methidathion; Carbamate wie Carbosulfan, Fenoxycarb, Thiocarb und Carbaryl; Pyrethroide wie Deltamethrin, Ethofenprox, Fluvalinate, Esfenvalerate, Beta-Cyfluthrin, Cypermethrin, L.-Cyhalothrin, Cycloprothrin, Bifenthin, Tralomethrin; Sonstige Insektizide wie Chlorfenapyr, Amitraz, Endosulfan, Bensulfap, Fipronil und Pyridafenthion; Juvenoide wie Flucycloxuron, Teflubenzuron, Hexaflumuron, Lufenuron, Diflubenzuron, Teufenozide und Fenoxycarb; Akarizide wie Fenbutatin-oxide, Pyridaben, Fenpyroximate, Fenazaquin, Dicofol, Cyhexatin und Tebufenpyrad.

Bevorzugte Pflanzenschutz-Wirkstoffe sind BAS 480 F (common name: Epoxiconazol), BAS 490 F (common name: Kresoxim-methyl), Chloridazon und N-(((4-methoxy-6-[trifluormethyl]-1,3,5-triazin-2-yl)amino)carbonyl)-2-(trifluormethyl)benzolsulfonamid.

Besonders bevorzugte Pflanzenschutz-Wirkstoffe sind N-(1-Ethylpropyl)-3,4-dimethyl-2,6-dinitroanilin (Pendimethalin) und Chlorpyrifos.

In den erfindungsgemäßen Mitteln können mehrere Pflanzenschutz-Wirkstoffe - auch unterschiedlicher Indikation - nebeneinander vorliegen.

Den Pflanzenschutz-Wirkstoff setzt man vorzugsweise bei der Herstellung der Mittel entweder als solchen ein oder man kann ihn daneben auch aus einem seiner Salze freisetzen oder vorzugsweise als solchen einsetzen.

Die verwendeten Pflanzenschutz-Wirkstoffe weisen in aller Regel eine Reinheit von 90 bis 100, vorzugsweise von 95 bis 100 % (nach NMR-Sektrum) auf.

Die vorstehend genannten Pflanzenschutz-Wirkstoffe liegen in den erfindungsgemäßen Mitteln in einem überwiegend amorphen Zustand vor. "Überwiegend amorph" bedeutet dabei, daß mehr als die Hälfte, vorzugsweise mehr als 70 % des Pflanzenschutz-Wirkstoffs in den erfindungsgemäßen Mitteln röntgenamorph sind wie sich mittels Röntgenstrukturanalyse zeigen ließ.

Umgekehrt kann der Grad der Kristallinität der Pflanzenschutz-Wirkstoffe in den erfindungsgemäßen Mitteln mit an sich bekannten Methoden wie der Röntgenweitwinkelstreuung (vgl. H.P. Klug, L.E. Alexander, "X-Ray Diffraction Procedures for Polycrystalline and Amorphous Materials", John Wiley, New York, 1959) oder der Differential Scanning Calorimetry (DSC) verläßlich ermitteln werden (vgl. P.J. Haines, "Thermal Methods of Analysis", Blackie Academic & Professional, Chapman & Hall, London, 1995).

Den Pflanzenschutz-Wirkstoffen können noch weitere im Pflanzenschutz übliche Formulierungszusätze beigegeben werden, welche die Löslichkeit des Pflanzenschutz-Wirkstoffs nicht über einen Wert von 500 mg/l erhöhen oder die Kristallisation des überwiegend amorphen Pflanzenschutz-Wirkstoffs auslösen oder fördern.

Bei den üblichen Formulierungszusätzen kommen vor allem Stabilisatoren und Weichmacher in Betracht.

Die Stabilisatoren haben im allgemeinen von Fall zu Fall eine oder mehrere der folgenden Aufgaben:
- sie sollen den amorphen Zustand der Pflanzenschutz-Wirkstoffe in den erfindungsgemäßen Mitteln stabilisieren,
- sie sollen verhindern, daß die in einem flüssigen Medium dispergierten Pflanzenschutz-Wirkstoffteilchen auf Kosten anderer Teilchen - kristallin - aufwachsen, was eine unerwünschte Sedimentierung der vergrößerten Teilchen zur Folge haben kann und
- sie sollen die Größe der erzeugten Teilchen steuern.

Als Stabilisatoren kommen gleichermaßen niedermolekulare Stoffe und polymere Stoffe und deren Mischungen in Betracht.

Bevorzugte niedermolekulare Stabilisatoren sind Mono- und Diglyceride, Ester von Monoglyceriden mit Essigsäure, Zitronensäure, Milchsäure oder Diacetylweinsäure, Alkylglucoside, Sorbitanfettsäureester, Propylenglycolfettsäureester, Stearoyl-2-lactylate, Lecitin, Fettsäurederivate von Harnstoffen und Urethanen wie Dioleylharnstoff und N-Oleyloleylurethan. Insbesondere eignen sich Ascorbylpalmitat und Fettsäurecarbonate wie Dioleylcarbonat.

Bevorzugte polymere Stabilisatoren sind Polyglycerinfettsäureester und Homo- und Copolymere auf Basis folgender Monomeren: Ethylenoxid, Propylenoxid, Acrylsäure, Maleinsäureanhydrid, Methylacrylat, Ethylacrylat, tert.-Butylacrylat, Methacrylsäure, Styrol, Isobuten, Milchsäure, N-Vinyl-2-pyrrolidon, Vinylacetat, Vinylacrylat, α-Asparaginsäure und β-Asparaginsäure.

Insbesondere sind als polymere Stabilisatoren bevorzugt:
- Homopolymere aus Vinylpyrrolidon, Acrylsäure oder Milchsäure und
- Copolymere aus Styrol und Acrylsäure; Acrylsäure und Methacrylsäure; Vinylacrylat und Vinylacetat; α- und β-Asparaginsäure; Vinylpyrrolid-2-on und Vinylacetat; Methylacrylat; Ethylacrylat und tert.-Butylacrylat; Ethylenoxid und Propylenoxid; Isobuten und Maleinsäureanhydrid.

Ganz besonders bevorzugte polymere Stabilisatoren sind Styrol-Acrylsäure-Copolymere mit 40 bis 80 mol-% Styrol und 60 bis 20 mol-% Acrylsäure, vor allem mit 50 bis 70 mol-% Styrol und 50 bis 30 mol-% Acrylsäure.

Der Anteil der Stabilisatoren an den erfindungsgemäßen Mitteln liegt in der Regel bei 0 bis 30 und vor allem bei 0 bis 10 Gew.-%, bezogen auf den Feststoffanteil der erfindungsgemäßen Pflanzenschutzmittel.

Die Weichmacher sind fast ausschließlich in der Hülle der erfindungsgemäßen Mittel enthalten.

Die Weichmacher haben insbesondere die Funktion, die mechanischen Eigenschaften der erfindungsgemäßen Mittel zu verbessern.
Geeignete Weichmacher sind z.B. Zucker oder Zuckeralkohole wie Saccharose, Glukose, Lactose, Invertzucker, Sorbit, Mannit oder Glycerin.

Der Anteil der Weichmacher in den erfindungsgemäßen Mitteln liegt normalerweise bei 0 bis 70 Gew.-% bezogen auf den Feststoffanteil der erfindungsgemäßen Pflanzenschutzmittel.

Der Anteil der vorstehend genannten weiteren Formulierungszusätze in den erfindungsgemäßen Mitteln liegt in der Summe in der Regel bei 20 bis 80 Gew.-% und ist naturgemäß abhängig vom jeweiligen Pflanzenschutz-Wirkstoff.

Bei der späteren Verwendung der Mittel im Pflanzenschutz zur Herstellung von Spritzbrühen hat die Hüllschicht vor allem die Aufgabe, die umhüllten Partikel in der Spritzbrühe gegen Zusammenlagerung zu stabilisieren und damit die Sedimentierung zu unterdrücken.

Dieser Effekt beruht vermutlich darauf,
- daß die Hüllschicht zu einer gleichartigen elektrischen Aufladung oder - bei Verwendung eines salzförmigen Pflanzenschutz-Wirkstoffs - einer Ladungsverstärkung oder Umladung der Partikel führt. Die gleichartig elektrisch geladenen Teilchen stoßen sich dann ab (elektrostatische Stabilisierung),
- daß die umhüllten Partikel räumlich voneinander getrennt gehalten werden (sterische Stabilisierung) und/oder
- daß die Hüllschicht weiterhin das Anwachsen der Teilchen durch Ostwald-Reifung verlangsamt bzw. unterdrückt (vgl. T.F. Tadros, "Surfactants in Agrochemicals", Surfactant Science Series, Volume 54, Marcel Dekker, New York, 1995).

Als Materialien für die Hüllschicht eignen sich grenzflächen- oder oberflächenaktive polymere Kolloide oder derartige, gegebenenfalls oligomere, amphiphile Verbindungen oder Gemische dieser Kolloide und amphiphilen Verbindungen.

Vorzugsweise verwendet man als derartige polymere Kolloide für die Hüllschicht Biopolymere und modifizierte Biopolymere wie Schweine-, Rinder- oder Fisch-Gelatine, z.B. Gelatine B 100 Bloom (Fa. Stoess, Eberbach, Deutschland) und Gelita Sol® P (Fa. Stoess, dto.), Pektin, Chitosan, Stärke, Dextrin, Gummiarabicum, Kasein, Kaseinat, Methylcellulose, Carboxymethylcellulose, Hydroxypropylcellulose, Alginate und Ligninderivate wie Ligninsulfonat.

Weiter geeignet sind synthetische anionische, kationische und neutrale Polymere wie Polyvinylalkohol, Polyvinylpyrrolidon, Polyacrylsäure, Polycarboxylate, Polyethylenglykole, Maleinsäureanhydrid-Isobuten-Copolymere, Vinylpyrrolidon-Vinylacetat-Copolymere, Naphthalinsulfonsäurekondensate (z.B. CAS-Nr. 9017-33-8, 9069-80-1, 9084-06-4, 9008-63-3, 108171-28-4, 86352-09-2) und Phenolsulfonsäurekondensate (z.B. CAS-Nr. 52277-29-9, 102980-04-1) sowie Polyethylenimin, Polyvinylamin, Polyvinylformamid und teilhydrolysiertes Polyvinylformamid.

Bevorzugte als Hüllmaterial geeignete amphiphile Verbindungen sind folgende Tenside oder vorzugsweise deren Gemische, in welchen die Alkylketten linear oder verzweigt sein können und welche Alkylketten von im allgemeinen zwischen 8 und 20 Kohlenstoffatomen aufweisen:
1. Anionische Tenside
   - Seifen (Alkali/Erdalkali/Ammoniumsalze der Fettsäuren), z.B. Kaliumstearat
   - Alkylsulfate
   - Alkylethersulfate
   - Alkyl/isoalkylsulfonate
   - Alkylbenzolsulfonat, z.B. Na-Dodecylbenzolsulfonat
   - Alkylnaphthalinsulfonate
   - Alkylmethylestersulfonate
   - Acylglutamate
   - Alkylbernsteinsäureestersulfonate
   - Mono/Diphosphorsäurealkylester
   - Sarkosinate, z.B. Na-Lauroylsarkosinat
   - Taurate
2. Kationische Tenside
   - Alkyltrimethylammonium-Halogenide/Alkylsulfate
   - Alkylpyridinium-Halogenide
   - Dialkyldimethylammonium-Halogenide/Alkylsulfate
3. Nichtionische Tenside
   - Alkoxylierte tierische/pflanzliche Fette und Öle, z.B. Maisölethoxylate, Rizinusölethoxilate, Talgfettethoxylate
   - Glycerinester, z.B. Glycerinmonostearat
   - Fettalkoholalkoxylate und Oxoalkoholalkoxylate
   - Fettsäurealkoxylate, z.B. Ölsäureethoxylate
   - Alkylphenolalkoxylate, z.B. Isononylphenolethoxylate
   - Fettaminalkoxylate
   - Fettsäureamidalkoxylate
   - Zuckertenside, z.B. Sorbitanfettsäureester (Sorbitanmonooleat,Sorbitantristearat), Polyoxyethylensorbitanfettsäureester, Alkylpolyglycoside, N-Alkylgluconamide
   - Alkylmethylsulfoxide
   - Alkyldimethylphosphinoxide, z.B. Tetradecyldimethylphosphinoxid
4. Zwitterionische Tenside
   - Sulfobetaine
   - Carboxybetaine
   - Alkyldimethylaminoxide, z.B. Tetradecyldimethylamminoxid
5. Polymertenside
   - Di- Tri- und Multi-Blockpolymere vom Typ (AB)x-, ABA und BAB, z.B. Polyethylenoxid-block-polypropylenoxid, Polystyrol-block-polyethylenoxid
   - AB-Kammpolymere, z.B. Polymeth/acrylat-comb-polyethylenoxid
6. Andere
   - Perfluortenside
   - Silicontenside
   - Phospholipide, z.B.Lecithin
   - Aminosäuretenside, z.B. N-Lauroylglutamat.

Die erfindungsgemäßen Mittel haben typischerweise folgende Zusammensetzung:
0,5-75 Gew.-% Pflanzenschutz-Wirkstoff
0-30 Gew.-% Stabilisator
0-70 Gew.-% Weichmacher
10-70 Gew.-% Hüllmaterial

Bevorzugt sind Mittel der folgenden Zusammensetzung:
5-50 Gew.-% Pflanzenschutz-Wirkstoff
0-20 Gew.-% Stabilisator
20-70 Gew.-% Weichmacher
10-60 Gew.-% Hüllmaterial

Besonders bevorzugt sind Mittel der folgenden Zusammensetzung:
10-40 Gew.-% Pflanzenschutz-Wirkstoff
0-10 Gew.-% Stabilisator
20-50 Gew.-% Weichmacher
10-50 Gew.-% Hüllmaterial

Die Herstellung des erfindungsgemäßen Mittels erfolgt so, daß man eine flüssige Formulierung des Pflanzenschutz-Wirkstoffs mit einer flüssigen Formulierung eines Hüllmaterials mischt und den derart erhaltenen umhüllten Pflanzenschutz-Wirkstoff in an sich bekannter Weise weitgehend trocknet.

Der Pflanzenschutz-Wirkstoff oder sein Salz wird mittels eines Lösungsmittels in eine flüssige Formulierung überführt. Unter "Lösungsmittel" werden Wasser, mit Wasser mischbare organische Lösungsmittel, Gemische aus Wasser und den organischen Lösungsmitteln und Gemische der organischen Lösungsmittel verstanden. Das auf diesem Weg erhältliche flüssige Produkt ist in der Regel eine molekulardisperse Lösung des Pflanzenschutz-Wirkstoffs.

Geeignete organische, mit Wasser mischbare Lösungsmittel sind solche, welche flüchtig und thermisch stabil sind und nur Kohlenstoff, Wasserstoff und Sauerstoff enthalten. Zweckmäßigerweise sind sie zu mindestens 10 % mit Wasser mischbar und weisen einen Siedepunkt von unter 200 °C auf und/oder haben weniger als 10 Kohlenstoffatome. Bevorzugt sind derartige Alkohole, Ether, Ester, Ketone und Acetale. Insbesondere verwendet man Ethanol, n-Propanol, Isopropanol, 1,2-Butandiol-1-methylether, 1,2-Propandiol-1-n-propylether oder Aceton.

In einer bevorzugten Ausführungsform des erfindungsgemäßen Verfahrens wird die molekular-disperse Lösung der Pflanzenschutz-Wirkstoffe so hergestellt, daß man den Wirkstoff zunächst in dem gewünschtenfalls zuvor erhitzten, mit Wasser mischbaren organischen Lösungsmitteln gegebenenfalls unter Druck löst.

Die molekular-disperse Lösung des Pflanzenschutz-Wirkstoffs wird durch das turbulente Vermischen mit der flüssigen Formulierung des Hüllmaterials (im folgenden "Dispergierlösung" genannt) in eine kolloidal stabile Dispersion (Mikronisat) umhüllter Teilchen des weitgehend amorphen Pflanzenschutz-Wirkstoffs überführt.

Der Anteil des Hüllmaterials in der Dispergierlösung beträgt normalerweise 0,5 bis 10 und vorzugsweise 1 bis 5 Gew.-%. Bezogen auf das Gewicht des Pflanzenschutz-Wirkstoffs setzt man in der Regel die 0,1- bis 10-fache Menge an Hüllmaterial ein.

Eine bevorzugte Ausführungsform des erfindungsgemäßen Verfahrens besteht darin, daß das Hüllmaterial in der Dispergierlösung stets im Überschuß vorliegt.

Um beim Mischvorgang möglichst kleine Teilchen zu erzielen, erzeugt man zweckmäßigerweise in der Mischkammer eine heftige Turbulenz, indem man die Wirkstofflösung und die Dispergierlösung mit mechanischen Hilfsmitteln rührt oder schüttelt oder insbesondere, indem man diese beiden Komponenten mit hartem Strahl in eine Mischkammer einspritzt.

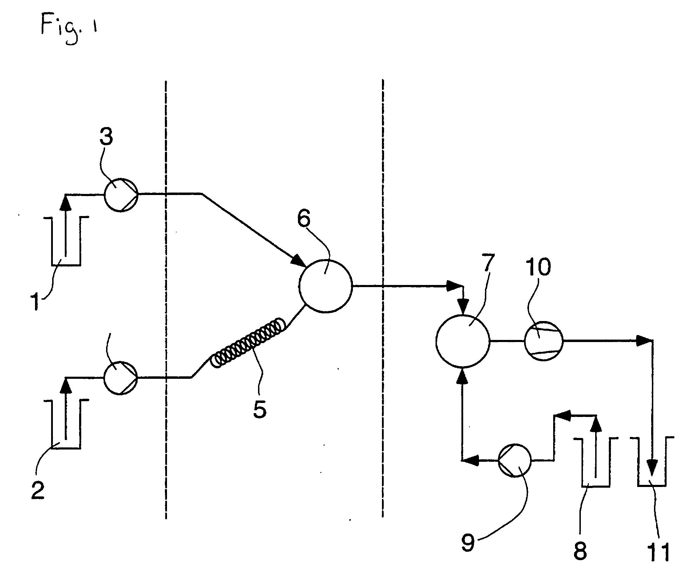

Eine geeignete Vorrichtung mit Mischkammer zeigt die Figur 1.

Im Gefäß (1) wird eine Suspension des Pflanzenschutz-Wirkstoffs in dem ausgewählten Lösungsmittel, in Konzentrationen von 0,1 bis 50 Gew.-%, bezogen auf die Mischung, gegebenenfalls unter Zusatz von 0,1 bis 30 Gew.-% an Stabilisatoren, vorgelegt. Gefäß (2) enthält das Lösungsmittel ohne Beimischung des Pflanzenschutz-Wirkstoffs. Über die Pumpen (3) bzw. (4) werden die Wirkstoff-Suspensionen und das Lösungsmittel der Mischkammer (6) zugeführt, wobei das Mischungsverhältnis durch Wahl der jeweiligen Förderleistung der Pumpen vorgegeben werden kann und so gewählt wird, daß je nach Lösungsmittel und Verweilzeit eine Wirkstoff-Konzentration in der Mischkammer von 0,02 bis 40 Gew.-%, bezogen auf die Lösung, entsteht. Das Mischkammervolumen (6) ist so bemessen, daß bei der gewählten Förderleistung der Pumpen (3) und (4) die Verweilzeit in (6) vorzugsweise weniger als 10 Sekunden beträgt.

Das Lösungsmittel wird vor Eintritt in die Mischkammer über den Wärmetauscher (5) auf die gewünschte Temperatur gebracht. Durch turbulente Mischung in (6) erfolgt im Temperaturbereich 20 bis 240 °C die Lösung des Wirkstoffes und die erhaltene Lösung tritt in die zweite Mischkammer (7) ein, in der durch Zumischen der Dispergierlösung über die Pumpe (9) die Ausfällung des Wirkstoffs in kolloiddisperser Form erfolgt. Die feinteilige Wirkstoffdispersion wird über das Überdruckventil (10) ausgetragen und dem Vorratsgefäß (11) zugeführt.

Bei Einstellung des Überdruckventils (10) auf Drücke oberhalb 1 bar können in dem Verfahren Lösungsmittel bei Temperaturen oberhalb ihres Siedepunktes (bei Normaldruck) verwendet werden.

Im Falle von lösungsmittellöslichen Pflanzenschutz-Wirkstoffen kann bereits im Gefäß (1) eine molekulardisperse Lösung entstehen. Diese Lösung kann auch direkt in Kammer (7) gepumpt werden.

Mit dem erfindungsgemäßen Verfahren erhält man in der Regel ein kolloid-disperses flüssiges Produkt, welches normalerweise zu 40 bis 99,5 und vor allem zu 60 bis 95 Gew.-% aus Wasser und/oder einem oder mehreren mit Wasser mischbaren organischen Lösungsmitteln besteht.

Die mittlere Teilchengröße in diesem kolloid-dispersen Produkt liegt in der Regel zwischen 0,05 und 1,5, und meist zwischen 0,1 und 1 µm (gemessen mittels dynamischer Lichtstreuung nach B. Chu, "Laser Light Scattering", Academic Press, New York, 1974).
Aus dem kolloid-dispersen Zwischenprodukt können die Lösungsmittel in Abhängigkeit vom Siedepunkt in an sich bekannter Weise, z.B. durch Destillation, gegebenenfalls unter vermindertem Druck, oder durch Extraktion entfernt werden. Weiterhin sind Membranfiltration und Gefriertrocknung (Lyophilisierung) möglich. Vorzugsweise bedient man sich jedoch hierzu, gegebenenfalls nach Aufkonzentration (Fallfilmverdampfer) der Sprühgranulation und insbesondere der Sprühtrocknung und des Doppelemulsionsverfahrens.

Das auf diese Weise erhältliche Trockenpulver weist normalerweise einen Lösungsmittel-Restgehalt von 1 bis 1000, zumeist jedoch von 5 bis 100 ppm auf. Der Wasser-Restgehalt liegt normalerweise bei 0,01 bis 10, zumeist bei 0,1 bis 6 Gew.-%, bezogen auf die Gesamtmasse an Trockenpulver.

Im Trockenpulver liegen in Abhängigkeit vor allem von Hüllmaterial und Trocknungsbedingungen Agglomerate von Nanopartikeln vor.

Um den Zerfall solcher Agglomerate beim Dispergieren des Trockenpulver vor der Anwendung zu unterstützen, kann dem kolloiddispersen Produkt nach der Mischstufe vorteilhafterweise vor dem Trocknen noch ein Sprühhilfsmittel wie Lactose oder Polyvinylpyrrolid-2-on zugegeben werden.

In einer bevorzugten Ausführungsform des erfindungsgemäßen Verfahrens, die auch für sich allein besonders vorteilhaft ist, wird die Herstellung der Wirkstofflösung in Gegenwart eines der vorstehend genannten Stabilisatoren durchgeführt. Ganz besonders bevorzugt sind hierbei Ascorbylpalmitat und Copolymere aus Acrylsäure und Styrol.

Das derart erhältliche Trockenpulver liefert beim Dispergieren in Wasser normalerweise wieder eine feindisperse Spritzbrühe mit nanopartikulärer Verteilung der Pflanzenschutz-Wirkstoffe.

Weitere Einzelheiten des Herstellverfahrens für das Trockenpulver sind dem Fachmann im übrigen geläufig und bedürfen daher keiner weiteren Erläuterung (vgl. EP-A 65 193 und EP-A 641 596).

Der mittlere Durchmesser der redispergierten Nanopartikel (Hydrosol) beträgt vorzugsweise 0,05 bis 2, vor allem 0,05 bis 1 und insbesondere 0,1 bis 0,8 µm.

Das Trockenpulver kann in üblichen Behältnissen, vor allem Flaschen, Kanistern oder aus chemikalienbeständigen Kunststoffen hergestellten Beuteln zum Anwender gelangen. Besonders vorteilhaft ist der Gebrauch von wasserlöslichen Behältnissen und hierunter vor allem von wasserlöslichen Folienbeuteln, insbesondere auf Basis von Polyvinylalkohol.

Die erfindungsgemäßen Mittel werden vor ihrem Gebrauch vom Anwender, in der Regel dem Landwirt, in an sich bekannter Weise mit Wasser zu den gebrauchsfertigen Spritzbrühen verarbeitet.

Die Spritzbrühen enthalten normalerweise 0,0001 bis 20, vorzugsweise 0,001 bis 10 und insbesondere 0,01 bis 1 Gew.-% des Pflanzenschutz-Wirkstoffs.

Die Applikation der Spritzbrühen kann in an sich bekannter Weise, vor allem durch Versprühen etwa mit einer fahrbaren Spritzmaschine anhand feinstverteilender Düsen erfolgen. Die hierfür weiterhin gebräuchlichen Geräte und Arbeitstechniken sind dem Fachmann bekannt.

Im folgenden wird die Applikation von Mitteln, welche einen herbiziden Pflanzenschutz-Wirkstoff enthalten, erläutert. Sinngemäß gelten dieses Ausführungen auch für Pflanzenschutz-Wirkstoffe anderer Indikationen.

Die erfindungsgemäßen Aufbereitungen von Wirkstoffen eignen sich als Herbizide und Wachstumsregulatoren.

Als herbizide Mittel bekämpfen sie unerwünschten Pflanzenwuchs auf Nichtkulturflächen sehr gut, besonders bei hohen Aufwandmengen. In Kulturen wie Weizen, Reis, Mais, Soja und Baumwolle wirken sie gegen Unkräuter und Schadgräser, ohne die Kulturpflanzen nennenswert zu schädigen. Dieser Effekt tritt vor allem bei niedrigen Aufwandmengen auf.

In Abhängigkeit von der jeweiligen Applikationsmethode können die Mittel noch in einer weiteren Zahl von Kulturpflanzen zur Beseitigung unerwünschter Pflanzen eingesetzt werden. In Betracht kommen beispielsweise folgende Kulturen:
Allium cepa, Ananas comosus, Arachis hypogaea, Asparagus officinalis, Beta vulgaris spp. altissima, Beta vulgaris spp. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spp., Manihot esculenta, Medicago sativa, Musa spp., Nicotiana tabacum (N.rustica), Olea europaea, Oryza sativa, Phaseolus lunatus, Phaseolus vulgaris, Picea abies, Pinus spp., Pisum sativum, Prunus avium, Prunus persica, Pyrus communis, Ribes sylestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera, Zea mays.

Darüber hinaus können die herbizide Mittel auch in Kulturen, die durch Züchtung einschließlich gentechnischer Methoden gegen die Wirkung von Herbiziden tolerant sind, als Herbizide verwandt werden.

Unerwünschte Pflanzen sind beispielsweise: Hühnerhirse (Echinochloa crus-galli), Brachiaria plantaginea, Ischaemum rugosum, Leptochloa dubia, Zurückgekrümmter Fuchsschwanz (Amaranthus retroflexus), Weißer Gänsefuß (Chenopodium album), Klebkraut (Galium aparine), Schwarzer Nachtschatten (Solanum nigrum), Ackerfuchsschwanz (Alopecurus myosuroides), Wind-Hafer (Avena fatua), Wehrlose Trespe (Bromus inermis), Einjähriges Rispengras (Poa annua), Borstenhirse (Setaria faberii), (Ausfall-)Weizen (Triticum aestivum), (Ausfall-)Mais (Zea mays).

Die Applikation der herbiziden Mittel bzw. der Wirkstoffe kann im Vorauflauf- oder im Nachauflaufverfahren erfolgen. Sind die Wirkstoffe für gewisse Kulturpflanzen weniger verträglich, so können Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die herbiziden Mittel können beispielsweise in Form von direkt versprühbaren wäßrigen Suspensionen, auch hochprozentigen wäßrigen, öligen oder sonstigen Suspensionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der erfindungsgemäßen Wirkstoffe gewährleisten.

Die erfindungsgemäßen herbiziden Mittel können zur Verbreiterung des Wirkungsspektrums und zur Erzielung synergistischer Effekte mit zahlreichen Vertretern anderer herbizider Wirkstoffgruppen gemischt und gemeinsam ausgebracht werden. Beispielsweise kommen als Mischungspartner 1,2,4-Thiadiazole, 1,3,4-Thiadiazole, Amide, Aminophosphorsäure und deren Derivate, Aminotriazole, Anilide, (Het)-Aryloxyalkansäure und deren Derivate, Benzoesäure und deren Derivate, Benzothiadiazinone, 2-Aroyl-1,3-cyclohexandione, Hetaryl-Aryl-Ketone, Benzylisoxazolidinone, Meta-CF₃-phenylderivate, Carbamate, Chinolinsäure und deren Derivate, Chloracetanilide, Cyclohexan-1,3-dionderivate, Diazine, Dichlorpropionsäure und deren Derivate, Dihydrobenzofurane, Dihydrofuran-3-one, Dinitroaniline, Dinitrophenole, Diphenylether, Dipyridyle, Halogencarbonsäuren und deren Derivate, Harnstoffe, 3-Phenyluracile, Imidazole, Imidazolinone, N-Phenyl-3,4,5,6-tetrahydrophthalimide, Oxadiazole, Oxirane, Phenole, Aryloxy- oder Heteroaryloxyphenoxypropionsäureester, Phenylessigsäure und deren Derivate, Phenylpropionsäure und deren Derivate, Pyrazole, Phenylpyrazole, Pyridazine, Pyridincarbonsäure und deren Derivate, Pyrimidylether, Sulfonamide, Sulfonylharnstoffe, Triazine, Triazinone, Triazolinone, Triazolcarboxamide, Uracile in Betracht.

Außerdem kann es von Nutzen sein, die erfindungsgemäßen Mittel allein oder in Kombination mit anderen herbiziden auch noch mit weiteren Pflanzenschutzmitteln gemischt, gemeinsam auszubringen, beispielsweise mit Mitteln zur Bekämpfung von Schädlingen oder phytopathogenen Pilzen bzw. Bakterien oder mit wachstumsregulierenden Mitteln. Von Interesse sind ferner Mischungen mit Mineralsalzlösungen, welche zur Behebung von Ernährungs- und Spurenelementmängeln eingesetzt werden. Es können auch nichtphytotoxische Öle und Ölkonzentrate zugesetzt werden.

Die erfindungsgemäßen Mittel können weiterhin die verschiedenen Entwicklungsstadien einer Pflanze beeinflussen und deshalb als Wachstumsregulatoren eingesetzt werden. Die Wirkungsvielfalt der Pflanzenwachstumsregulatoren ist vor allem abhängig
a) von der Pflanzenart und -sorte,
b) von dem Zeitpunkt der Applikation, bezogen auf das Entwicklungsstadium der Pflanze, und von der Jahreszeit,
c) von dem Applikationsort und -verfahren (z.B. Samenbeize, Bodenbehandlung, Blattapplikation oder Stamminjektion bei Bäumen),
d) von klimatischen Faktoren (z.B. Temperatur, Niederschlagsmenge, außerdem auch Tageslänge und Lichtintensität),
e) von der Bodenbeschaffenheit (einschließlich Düngung),
f) von der Formulierung bzw. Anwendungsform des Wirkstoffs und
g) von den angewendeten Konzentrationen der aktiven Substanz.

Aus der Reihe der verschiedenartigen Anwendungsmöglichkeiten der erfindungsgemäßen Pflanzenwachstumsregulatoren im Pflanzenanbau, in der Landwirtschaft und im Gartenbau, werden einige nachstehend erwähnt:
A. Mit den erfindungsgemäß verwendbaren Mitteln läßt sich das vegetative Wachstum der Pflanzen stark hemmen, was sich insbesondere in einer Reduzierung des Längenwachstums äußert. Die behandelten Pflanzen weisen demgemäß einen gedrungenen Wuchs aus; außerdem ist eine dunklere Blattfärbung zu beobachten.
   Als vorteilhaft für die Praxis erweist sich eine verminderte Intensität des Wachstums von Gräsern an Straßenrändern, Hekken, Kanalböschungen und auf Rasenflächen wie Park-Sport- und Obstanlagen, Zierrasen und Flugplätzen, so daß der arbeitsund kostenaufwendige Rasenschnitt reduziert werden kann.
   Von wirtschaftlichem Interesse ist auch die Erhöhung der Standfestigkeit von lageranfälligen Kulturen wie Getreide, Mais, Sonnenblumen und Soja. Die dabei verursachte Halmverkürzung und Halmverstärkung verringern oder beseitigen die Gefahr des "Lagerns" (des Umknickens) von Pflanzen unter ungünstigen Witterungsbedingungen vor der Ernte.
   Wichtig ist auch die Anwendung von Wachstumsregulatoren zur Hemmung des Längenwachstums und zur zeitlichen Veränderung des Reifeverlaufs bei Baumwolle. Damit wird ein vollständig mechanisiertes Beernten dieser wichtigen Kulturpflanze ermöglicht.
   Bei Obst- und anderen Bäumen lassen sich mit den Wachstumsregulatoren Schnittkosten einsparen. Außerdem kann die Alternanz von Obstbäumen durch Wachstumsregulatoren gebrochen werden.
   Durch Anwendung von Wachstumsregulatoren kann auch die seitliche Verzweigung der Pflanzen vermehrt oder gehemmt werden. Daran besteht Interesse, wenn z. B. bei Tabakpflanzen die Ausbildung von Seitentrieben (Geiztrieben) zugunsten des Blattwachstums gehemmt werden soll.
   Mit Wachstumsregulatoren läßt sich beispielsweise bei Winterraps auch die Frostresistenz erheblich erhöhen. Dabei wird einerseits das Längenwachstum und die Entwicklung einer zu üppigen (und dadurch besonders frostanfälligen) Blatt- bzw. Pflanzenmasse gehemmt. Andererseits werden die jungen Rapspflanzen nach der Aussaat und vor dem Einsetzen der Winterfröste trotz günstiger Wachstumsbedingungen im vegetativen Entwicklungsstadium zurückgehalten. Dadurch wird auch die Frostgefährdung solcher Pflanzen beseitigt, die zum vorzeitigen Abbau der Blühhemmung und zum Übergang in die generative Phase neigen. Auch bei anderen Kulturen, z.B. Wintergetreide ist es vorteilhaft, wenn die Bestände durch Behandlung mit erfindungsgemäßen Verbindungen im Herbst zwar gut bestockt werden, aber nicht zu üppig in den Winter hineingehen. Dadurch kann der erhöhten Frostempfindlichkeit und - wegen der relativ geringen Blatt- bzw. Pflanzenmasse - dem Befall mit verschiedenen Krankheiten (z.B. Pilzkrankheit) vorgebeugt werden. Die Hemmung des vegetativen Wachstums ermöglicht außerdem bei vielen Kulturpflanzen eine dichtere Bepflanzung des Bodens, so daß ein Mehrertrag bezogen auf die Bodenfläche erzielt werden kann.
B. Mit den Wachstumsregulatoren lassen sich Mehrerträge sowohl an Pflanzenteilen als auch an Pflanzeninhaltsstoffen erzielen. So ist es beispielsweise möglich, das Wachstum größerer Mengen an Knospen, Blüten, Blättern, Früchten, Samenkörnern, Wurzeln und Knollen zu induzieren, den Gehalt an Zucker in Zuckerrüben, Zuckerrohr sowie Zitrusfrüchten zu erhöhen, den Proteingehalt in Getreide oder Soja zu steigern oder Gummibäume zum vermehrten Latexfluß zu stimulieren.
   Dabei können die erfindungsgemäßen Mittel Ertragssteigerungen durch Eingriffe in den pflanzlichen Stoffwechsel bzw. durch Förderung oder Hemmung des vegetativen und/oder des generativen Wachstums verursachen.
C. Mit Pflanzenwachstumsregulatoren lassen sich schließlich sowohl eine Verkürzung bzw. Verlängerung der Entwicklungsstadien als auch eine Beschleunigung bzw. Verzögerung der Reife der geernteten Pflanzenteile vor oder nach der Ernte erreichen.
   Von wirtschaftlichem Interesse ist beispielsweise die Ernteerleichterung, die durch das zeitlich konzentrierte Abfallen oder Vermindern der Haftfestigkeit am Baum bei Zitrusfrüchten, Oliven oder bei anderen Arten und Sorten von Kern-, Stein- und Schalenobst ermöglicht wird. Derselbe Mechanismus, das heißt die Förderung der Ausbildung von Trenngewebe zwischen Frucht- bzw. Blatt- und Sproßteil der Pflanze ist auch für ein gut kontrollierbares Entblättern von Nutzpflanzen wie beispielsweise Baumwolle wesentlich.
D. Mit Wachstumsregulatoren kann weiterhin der Wasserverbrauch von Pflanzen reduziert werden. Dies ist besonders wichtig für landwirtschaftliche Nutzflächen, die unter einem hohen Kostenaufwand künstlich bewässert werden müssen, z.B. in ariden oder semiariden Gebieten. Durch den Einsatz der erfindungsgemäßen Substanzen läßt sich die Intensität der Bewässerung reduzieren und damit eine kostengünstigere Bewirtschaftung durchführen. Unter dem Einfluß von Wachstumsregulatoren kommt es zu einer besseren Ausnutzung des vorhandenen Wassers, weil u.a.
   - die Öffnungsweite der Stomata reduziert wird
   - eine dickere Epidermis und Cuticula ausgebildet werden,
   - Die Durchwurzelung des Bodens verbessert wird und
   - Das Mikroklima im Pflanzenbestand durch einen kompakteren Wuchs günstig beeinflußt wird.

Besonders gut eignen sich die Mittel zur Halmverkürzung von Kulturpflanzen wie Gerste, Raps und Weizen.

Die erfindungsgemäß hergestellten Wachstumsregulatoren können den Kulturpflanzen sowohl vom Samen her (als Saatgutbeizmittel) als auch über den Boden, d.h. durch die Wurzel sowie - besonders bevorzugt - durch Spritzung über das Blatt, zugeführt werden. Die Herstellung der Mittel erfolgt dabei analog zu der von Herbiziden (s.o.).

Die Aufwandmenge an wachstumsregulatorischem Wirkstoff ist infolge der hohen Pflanzenverträglichkeit nicht kritisch. Die optimale Aufwandmenge variiert je nach Bekämpfungsziel, Jahreszeit, Zielpflanzen und Wachstumsstadien.

### Beispiele

### Herstellungsbeispiele

### Analytik

- DSC:: Gerät Mettler TA4000, Aufheizrate 10°C/min
- Quasi-elastische Lichtstreuung:: Gerät BI 90 der Fa. Brookhaven
- Fraunhofer-Beugung:: Gerät Particle Sizer 2600, Fa. Malvern
- Röntgenweitwinkelstreuung:: Gerät Siemens D 5000

### Herstellbeispiel 1

### Herstellung eines Trockenpulvers am Beispiel von Chlorpyrifos (Wirkstoffgehalt: ca. 15 Gew.-%)

### a) Herstellung des Mikronisats

24 g Chlorpyrifos (Reinheit: 96,5 Gew.-%) wurden in eine Lösung von 4,8 g Ascorbylpalmitat in 146 g Aceton bei 25 °C eingerührt, wobei eine klare Lösung entstand. Diese Lösung wurde bei 163 °C mit 113 g Aceton in der Mischkammer (6) gemischt.

Die Ausfällung des Chlorpyrifos in kolloid-disperser Form erfolgte so, daß man die molekular-disperse Lösung nach einer Verweildauer von 3,2 Sekunden der Mischkammer (7) zuführte. Dort erfolgte bei 34 °C die Vermischung mit 3200 g einer mittels 1 N NaOH auf pH 9,2 eingestellten wäßrigen Lösung von 13,6 g Gelatine B 100 Bloom, 58,4 g Gelita Sol® P und 48 g Lactose in vollentsalztem Wasser. Der gesamte Prozeß erfolgt unter Druckbegrenzung auf 30 bar mittels Ventil (10), um eine Verdampfung des Lösungsmittels zu verhindern. Im Auffanggefäß (11) wurde eine kolloiddisperse Chlorpyrifos-Dispersion mit weiß-trübem Farbton erhalten.

Durch quasi-elastische Lichtstreuung wurde die mittlere Teilchengröße zu 247 nm bei einer Verteilungsbreite von ±37 % bestimmt. Mittels Fraunhofer-Beugung wurde der Mittelwert der Volumenverteilung zu D(4,3) = 0,62 µm bei einem Feinanteil der Verteilung von 99,8 % < 1,22 µm bestimmt.

### b) Trocknung der Dispersion aus (a) zu einem nanopartikulären Trockenpulver

Sprühtrocknung des Produkts aus Herstellbeispiel 1 a) führte zu einem freifließenden nanopartikulären Trockenpulver. Der Wirkstoffgehalt im Pulver wurde chromatographisch zu 15,42 Gew.-% Chlorpyrifos (theoret. Wert: 15,56 Gew.-%) bestimmt. Das Trockenpulver löste sich in Trinkwasser unter Bildung einer weiß-trüben Dispersion (Hydrosol).

Durch quasi-elastische Lichtstreuung wurde die mittlere Teilchengröße sofort nach dem Redispergieren zu 333 nm bei einer Verteilungsbreite von ±38 % bestimmt. Mittels Fraunhofer-Beugung wurde der Mittelwert der Volumenverteilung bestimmt zu D(4,3) = 0,87 µm bei einem Feinanteil der Verteilung von 87,8 % < 1,22 µm. Innerhalb von 4-6 Stunden wurde keine merkliche Zunahme der Partikelgröße beobachtet (vgl. Tabelle 1). Die innerhalb der ersten Stunde nach dem Redispergieren abnehmende Teilchengröße spiegelt den Zerfall und das vollständige Redispergieren in Form von Nanopartikeln der bei der Sprühtrocknung gebildeten Teilchenanlagerungen wieder.

**Tabelle 1:**

| Partikelgrößen (Fraunhofer-Beugung) eines Chlorpyrifos-Hydrosols mit 0,2 % Wirkstoffgehalt, hergestellt durch manuelles Einrühren des Chlorpyrifos-Trockenpulvers aus b) in Trinkwasser bei Raumtemperatur am gleichen Tag, an dem die Sprühtrocknung durchgeführt wurde. | | |
|---|---|---|
| Zeitpunkt nach Redispergieren | D(4,3) [µm] | Feinanteil < 1,22 µm |
| Sofort | 0,87 | 87,8 |
| 1 h | 0,63 | 99,2 |
| 2 h | 0,63 | 98,7 |
| 3 h | 0,65 | 97,1 |
| 4 h | 0,64 | 97,5 |
| 6 h | 0,74 | 86,9 |
| 2 d | 6,27 | 9,1 |

### c) Lagerverhalten

Das gemäß Herstellbeispiel 1 b) erhaltene Trockenpulver wurde 3 1/2 Monate bei Raumtemperatur und normaler Raumfeuchte aufbewahrt. Danach wurden die Partikelgrößen des Hydrosols erneut bestimmt. Im Vergleich zur frischen Trockenpulver-Probe waren die Teilchengrößen geringfügig erhöht.

Durch quasi-elastische Lichtstreuung wurde die mittlere Teilchengröße sofort nach dem Redispergieren zu 385 nm bei einer Verteilungsbreite von ±42 % bestimmt. Mittels Fraunhofer-Beugung wurde der Mittelwert der Volumenverteilung bestimmt zu D(4,3) = 0,88 µm bei einem Feinanteil der Verteilung von 75,5 % < 1,22 µm. Innerhalb von 4-6 Stunden wurde keine merkliche Zunahme der Partikelgröße beobachtet (vgl. Tabelle 2).

**Tabelle 2:**

| Partikelgrößen (Fraunhofer-Beugung) eines Chlorpyrifos-Hydrosols mit 0,2 Gew.-% Wirkstoffgehalt, hergestellt durch manuelles Einrühren des Chlorpyrifos-Trockenpulvers aus b) in Trinkwasser bei Raumtemperatur, 3 1/2 Monate nachdem die Sprühtrocknung durchgeführt worden war. | | |
|---|---|---|
| Zeitpunkt nach Redispergieren | D(4,3) [µm] | Feinanteil < 1,22 µm |
| Sofort | 0,88 | 75,5 |
| 1 h | 0,74 | 86,8 |
| 2 h | 0,74 | 87,0 |
| 3 h | 0,74 | 87,1 |
| 4 h | 0,74 | 87,1 |
| 1 d | 3,33 | 15,8 |

### d) Differential Scanning Calorimetry (vgl. Fig. 2 bis Fig. 9)

Für die niedermolekularen Komponenten Chlorpyrifos, Ascorbylpalmitat und Lactose wurden scharfe Schmelzpeaks gemessen (Figuren 2 bis 4). Das Maximum des Schmelzpeaks des Wirkstoffes Chlorpyrifos wurde zu 45 °Cbestimmt, was erwartungsgemäß geringfügig über dem Literaturwert von 42,0 bis 43,5 °Clag (Effekt der endlichen Aufheizzeit). Für die beiden Gelatinen Gelita Sol® P und B 100 Bloom erhielt man breite, wenig strukturierte Banden (Figuren 5 und 6).

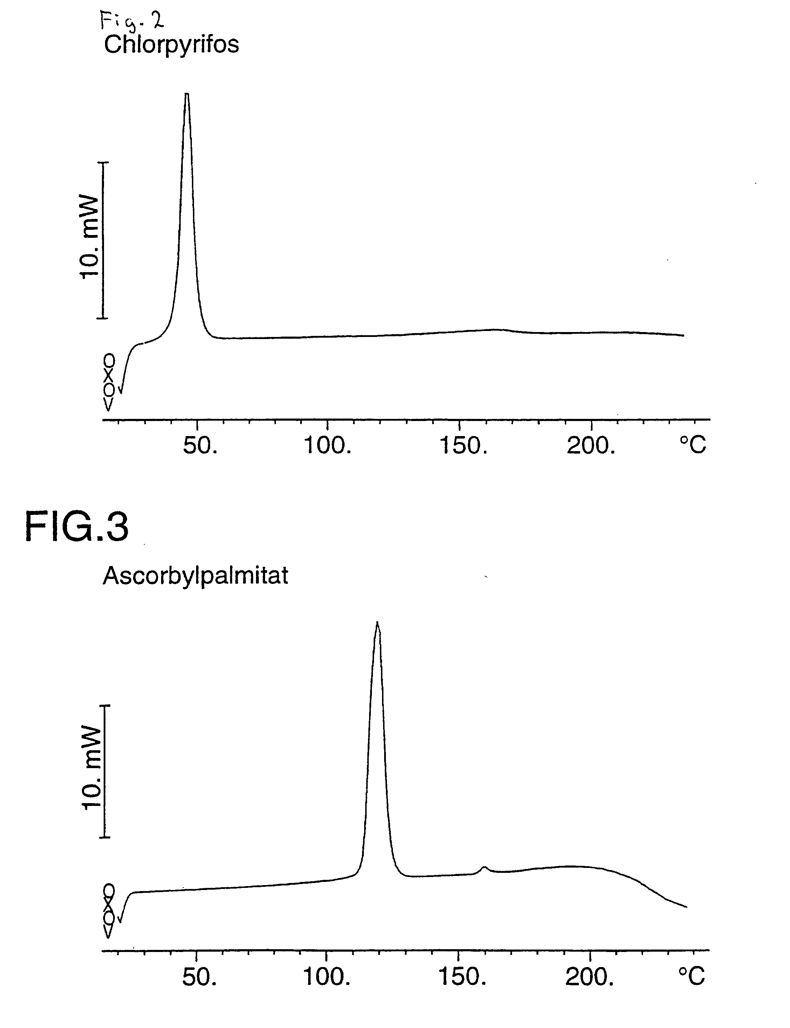

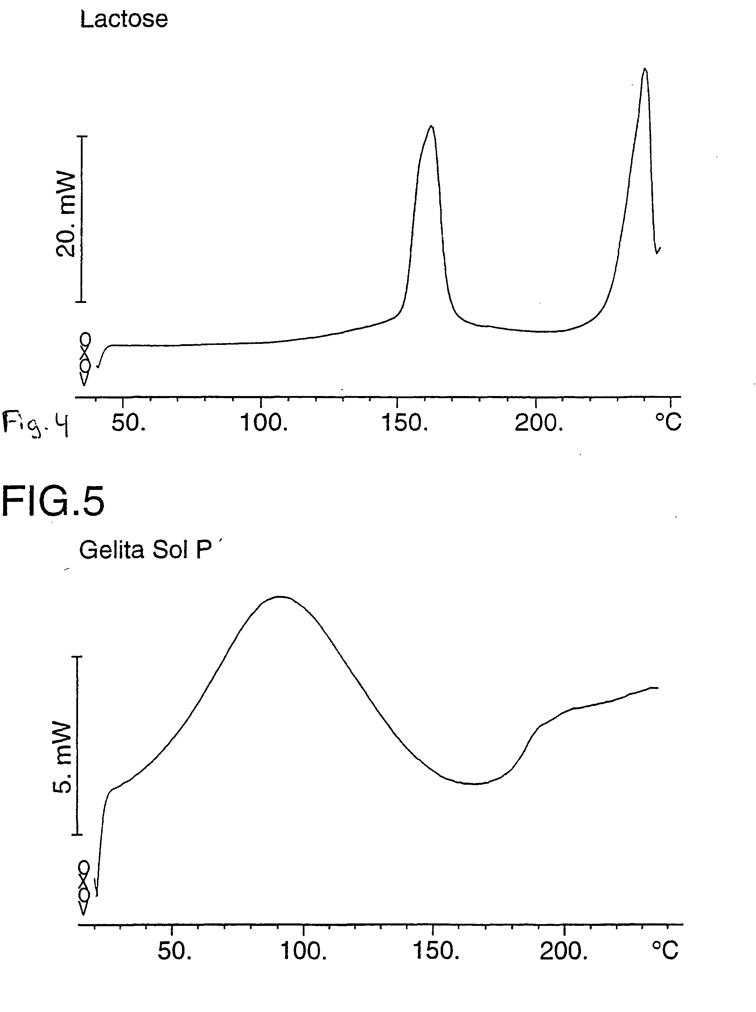

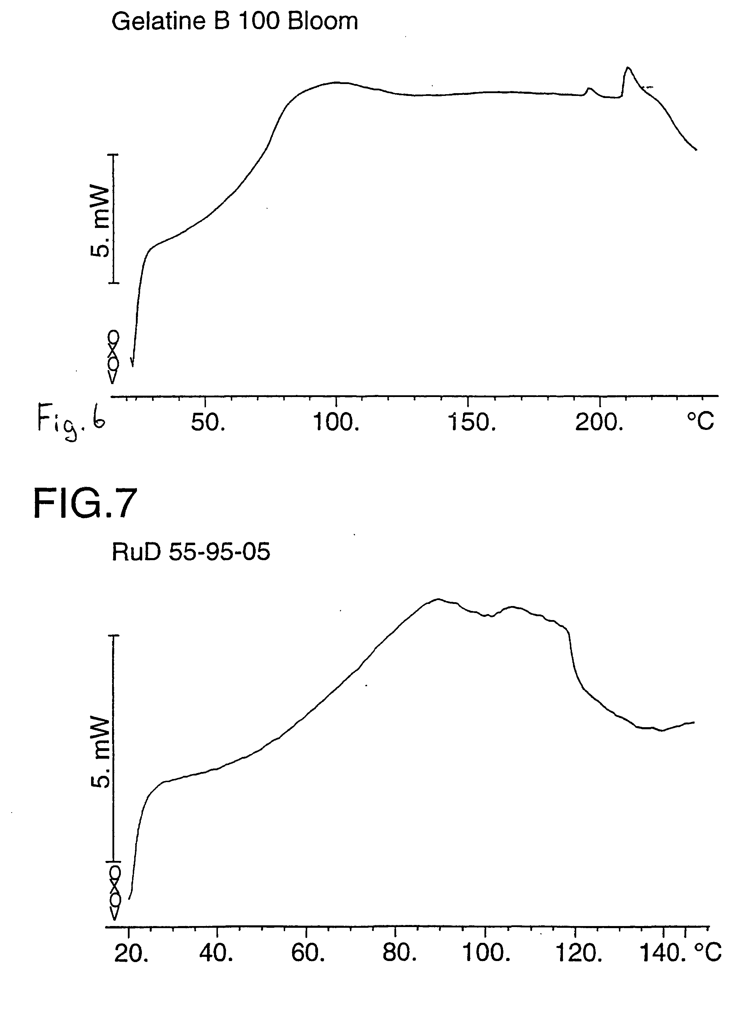

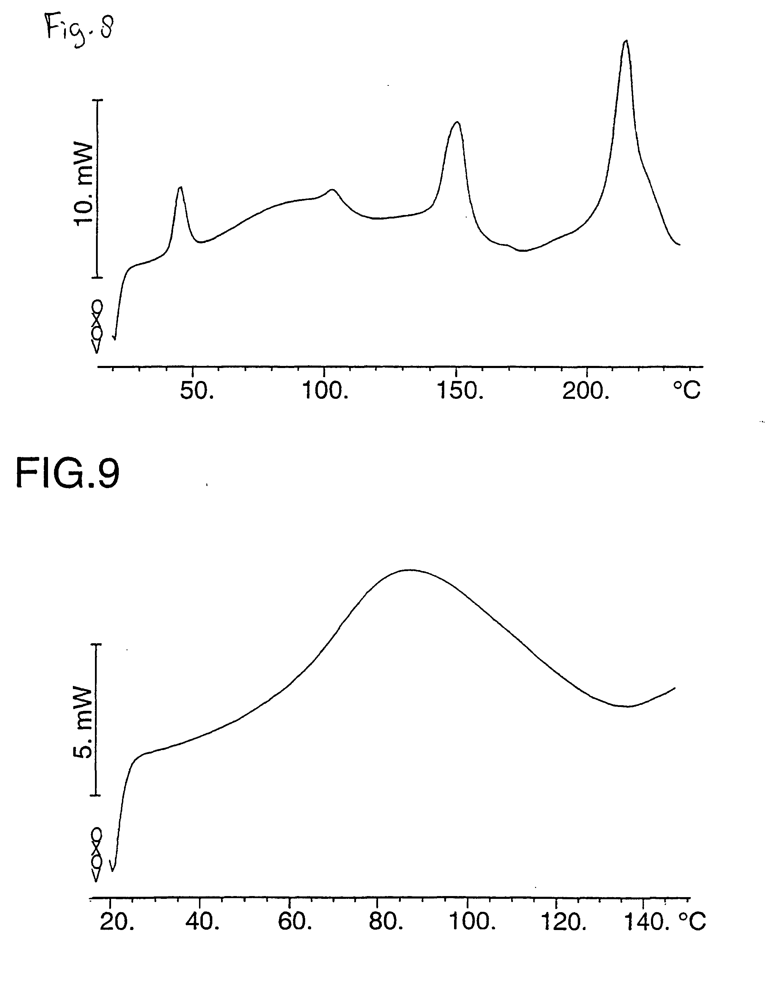

In Figur 7 und 8 sind die DSC-Kurven des Trockenpulvers gemäß Herstellbeispiel 1 b) nach 3 1/2 monatiger Lagerung (Figur 7) und die einer Formulierung identischer Zusammensetzung, die aber durch Vermahlen der kristallinen Ausgangskomponenten hergestellt wurde (Figur 8), gegenübergestellt. In der Vermahlung erkennt man 4 Peaks, die den Schmelzpeaks der kristallinen Komponenten Chlorpyrifos, Ascorbylpalmitat und Lactose zuzuordnen sind (vgl. Figuren 2 bis 4). Diese Peaks sind auf den breiten Untergrund der Gelatinesignale "aufgesetzt". Im Gegensatz dazu wird in der Messung des gemäß Beispiel 1 hergestellten Trockenpulvers (Figur 7) nur ein breiter Anstieg und Abfall beobachtet. Insbesondere fehlt der Schmelzpeak des kristallinen Wirkstoffes Chlorpyrifos, was darauf hinweist, daß der Wirkstoff im nanopartikulären Trockenpulver überwiegenden amorph vorliegt.

### e) Röntgenwweitwinkelstreuung

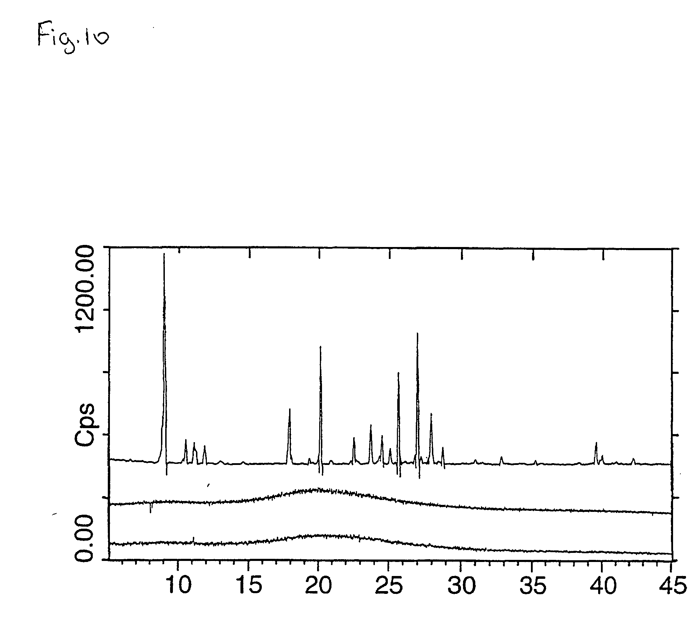

In Figur 10 sind die Streukurven von Wirkstoff (oben) und Trockenpulver gemäß Herstellbeispiel 1 b) (Mitte) enthalten. Die Chlorpyrifos-Ausgangsware ist, wie das durch eine Reihe scharfer Interferenzen ausgezeichnete Interferenzdiagramm belegt, kristallin. Im Gegensatz dazu weist die Streukurve des Trockenpulvers nur diffuse, breite Interferenzmaxima auf, wie sie für amorphes Material typisch sind. Der Wirkstoff liegt im nach 1 b) hergestellten Trockenpulver demnach röntgenamorph vor. Dies gilt auch für die sonst kristallinen Hilfsstoffe Lactose und Ascorbylpalmitat.

### Herstellbeispiel 2

### Herstellung eines Trockenpulvers am Beispiel von Chlorpyrifos (Wirkstoffgehalt: ca. 25 Gew.-%)

### a) Herstellung des Mikronisats

48 g Chlorpyrifos (Reinheit: 96,5 %) wurden in eine Lösung von 9,6 g Ascorbylpalmitat in 144 g Aceton bei 25 °C eingerührt, wobei eine klare Lösung entstand.

Diese Lösung wurde bei 156 °C mit 79 g Aceton in der Mischkammer (6) gemischt. Die Ausfällung des Chlorpyrifos in kolloiddisperser Form erfolgte so, daß man die molekulardisperse Lösung nach einer Verweildauer von 3,4 Sekunden der Mischkammer (7) zuführte. Dort erfolgte bei 32 °C die Vermischung mit 3320 g einer mittels 1 N NaOH auf pH 9,2 eingestellten wäßrigen Lösung von 14,1 g Gelatine B 100 Bloom, 60,5 g Gelita Sol® P und 50 g Lactose in vollentsalztem Wasser. Der gesamte Prozeß erfolgt unter Druckbegrenzung auf 30 bar mittels Ventil (10), um eine Verdampfung des Lösungsmittels zu verhindern. Im Auffanggefäß (11) wurde eine kolloiddisperse Chlorpyrifos-Dispersion mit weiß-trübem Farbton erhalten.

Durch quasi-elastische Lichtstreuung wurde die mittlere Teilchengröße zu 252 nm bei einer Verteilungsbreite von ±27 % bestimmt. Mittels Fraunhofer-Beugung wurde der Mittelwert der Volumenverteilung zu D(4,3) = 0,62 µm bei einem Feinanteil der Verteilung von 99,8 % < 1,22 µm bestimmt.

### b) Trocknung der Dispersion aus (a) zu einem nanopartikulären Trockenpulver

Sprühtrocknung des Produkts aus Herstellbeispiel a) führte zu einem freifließenden nanopartikulären Trockenpulver. Der Wirkstoffgehalt im Pulver wurde chromatographisch zu 24,67 Gew.-% Chlorpyrifos (theoret. Wert: 25,46 Gew.-%) bestimmt. Das Trockenpulver löste sich in Trinkwasser unter Bildung einer weiß-trüben Dispersion (Hydrosol).

Durch quasi-elastische-Lichtstreuung wurde die mittlere Teilchengröße sofort nach dem Redispergieren zu 349 nm bei einer verteilungsbreite von ±55 % bestimmt. Mittels Fraunhofer-Beugung wurde der Mittelwert der Volumenverteilung bestimmt zu D (4,3) = 0,66 µm bei einem Feinanteil der Verteilung von 96,4 % < 1,22 µm. Innerhalb von 4-6 Stunden wurde keine merkliche Zunahme der Partikelgröße beobachtet (vgl. Tabelle 3).

**Tabelle 3:**

| Partikelgrößen (Fraunhofer-Beugung) eines Chlorpyrifos-Hydrosols mit 0,2 % Wirkstoffgehalt, hergestellt durch manuelles Einrühren des Chlorpyrifos-Trockenpulvers aus b) in Trinkwasser bei Raumtemperatur am gleichen Tag, an dem die Sprühtrocknung durchgeführt wurde. | | |
|---|---|---|
| Zeitpunkt nach Redispergieren | D(4,3) [µm] | Feinanteil < 1,22 µm |
| Sofort | 0,66 | 96,4 |
| 1 h | 0,65 | 96,6 |
| 2 h | 0,63 | 98,4 |
| 3 h | 0,65 | 96,5 |
| 4 h | 0,65 | 96,7 |
| 6 h | 0,73 | 87,4 |
| 2 d | 5,89 | 28,2 |

### c) Lagerverhalten

Das gemäß Herstellbeispiel 2 b) erhaltene Trockenpulver wurde 3 1/2 Monate bei Raumtemperatur und normaler Raumfeuchte aufbewahrt. Danach wurde die Partikelgrößen des Hydrosols erneut bestimmt. Im Vergleich zur frischen Trockenpulver-Probe waren die Teilchengrößen geringfügig erhöht.

Durch quasi-elastische Lichtstreuung wurde die mittlere Teilchengröße sofort nach dem Redispergieren zu 345 nm bei einer Verteilungsbreite von ±43 % bestimmt. Mittels Fraunhofer-Beugung wurde der Mittelwert der Volumenverteilung bestimmt zu D(4,3) = 0,89 µm bei einem Feinanteil der Verteilung von 72,9 % < 1,22 µm. Innerhalb von 4-6 Stunden wurde keine merkliche Zunahme der Partikelgröße beobachtet (vgl. Tabelle 4).

**Tabelle 4:**

| Partikelgrößen (Fraunhofer-Beugung) eines Chlorpyrifos-Hydrosols mit 0,2 Gew.-% Wirkstoffgehalt, hergestellt durch manuelles Einrühren des Chlorpyrifos-Trockenpulvers aus b) in Trinkwasser bei Raumtemperatur, 3 1/2 Monate nachdem die Sprühtrocknung durchgeführt worden war. | | |
|---|---|---|
| Zeitpunkt nach Redispergieren | D(4,3) [µm] | Feinanteil < 1,22 µm |
| Sofort | 0,89 | 72,9 |
| 1 h | 0,75 | 86,3 |
| 2 h | 0,74 | 87,0 |
| 3 h | 0,75 | 86,4 |
| 4 h | 0,75 | 86,2 |
| 1 d | 4,80 | 13,2 |

### d) Differential Scanning Calorimetry

Figur 9 zeigt die DSC-Kurve des Trockenpulvers aus Herstellbeispiel 2. Der fehlende Schmelzpeak des Chlorpyrifos weist auf den auch nach Lagerung überwiegend amorphen Wirkstoff in den Partikeln hin.

### e) Röntgenweitwinkelstreuung

In Figur 10 sind die Streukurven von Wirkstoff (oben) und Trockenpulver gemäß Herstellbeispiel 2 b) (unten) enthalten. Auch hier weist die Streukurve des Trockenpulvers nur diffuse, breite Interferenzmaxima auf, wie sie für amorphes Material typisch sind. Der Wirkstoff liegt in dem nach 2 b) hergestellten Trockenpulver demnach röntgenamorph vor.

### Anwendungsbeispiele

Die herbizide Wirkung der erfindungsgemäßen Mittel ließ sich durch Gewächshausversuche zeigen:
Als Kulturgefäße dienten Plastiktöpfe mit lehmigem Sand mit etwa 3,0 % Humus als Substrat. Die Samen der Testpflanzen wurden nach Arten getrennt eingesät.

Bei herbiziden Mitteln können die Aufwandmengen an Wirkstoff je nach Bekämpfungsziel, Jahreszeit, Zielpflanzen und Wachstumsstadium in weiten Bereichen variieren.

Bei Vorauflaufbehandlung wurden die in Wasser suspendierten Mittel direkt nach Einsaat mittels fein verteilender Düsen aufgebracht. Die Gefäße wurden leicht beregnet, um Keimung und Wachstum zu fördern und anschließend mit durchsichtigen Plastikhauben abgedeckt, bis die Pflanzen angewachsen waren. Diese Abdeckung bewirkt ein gleichmäßiges Keimen der Testpflanzen, sofern dies nicht durch die Wirkstoffe beeinträchtigt wurde.

Zum Zweck der Nachauflaufbehandlung wurden die Testpflanzen je nach Wuchsform erst bis zu einer Wuchshöhe von 3 bis 15 cm angezogen und erst dann mit den in Wasser suspendierten Mitteln behandelt. Die Testpflanzen wurden dafür entweder direkt gesät und in den gleichen Gefäßen aufgezogen oder sie wurden erst als Keimpflanzen getrennt angezogen und einige Tage vor der Behandlung in die Versuchsgefäße verpflanzt. Zur Behandlung wurden die in Wasser suspendierten Mittel mittels fein verteilender Düsen auf die Blätter aufgesprüht.

Die Pflanzen wurden artenspezifisch bei Temperaturen von 10-25°C bzw. 20-35°C gehalten. Die Versuchsperiode erstreckte sich über 2 bis 4 Wochen. Während dieser Zeit wurden die Pflanzen gepflegt, und ihre Reaktion auf die einzelnen Behandlungen wurde ausgewertet.

Bewertet wurde nach einer Skala von 0 bis 100. Dabei bedeutet 100 kein Aufgang der Pflanzen bzw. völlige Zerstörung zumindest der oberirdischen Teile und 0 keine Schädigung oder normaler Wachstumsverlauf.

Die in den Gewächshausversuchen verwendeten Pflanzen setzten sich unter anderem aus folgenden Arten zusammen:

| **Lateinischer Name** | **Deutscher Name** |
|---|---|
| Triticum aestivum^{a,b} | Weizen |
| Zea mays^{a,b} | Mais |
| Glycine max^{a} | Soja |
| Alopecurus myosuroides | Ackerfuchsschwanz |
| Avena fatua | Windhalm |
| Bromus inermis | Wehrlose Trespe |
| Digitaria sanguinalis | Blut-Fingerhirse |
| Echinochloa crus-galli | Hühnerhirse |
| Poa annua | Einjähriges Rispengras |
| Setaria faberi | Borstenhirse |
| Brachiaria plantaginea | |
| Ischaemum rugosum | |
| Leptochloa dubia | |
| Amaranthus retroflexus | Zurückgekrümmter Fuchsschwanz |
| Chenopodium album | Weißer Gänsefuß |
| Galium aparine | Klebkraut |
| Solanum nigrum | Schwarzer Nachtschatten |

| | |
|---|---|
| ^{a} = Zielkulturpflanze | |
| ^{b} = als "Ausfallweizen" oder "Ausfallmais" auch eine zu bekämpfende Pflanzenart | |

Mit den erfindungsgemäßen Mitteln lassen sich unerwünschte breitblättrige Pflanzen und Schadgräser im Nachauflaufverfahren bzw. im Vorauflaufverfahren sehr gut bekämpfen.

## Patentansprüche

1. Festes Pflanzenschutzmittel, bestehend im wesentlichen aus
a) einem oder mehreren überwiegend amorphen festen Pflanzenschutz-Wirkstoffen in nanopartikulärer Form mit einer Wasserlöslichkeit von weniger als 500 mg/l bei 25 °C und
b) einer die Komponente (a) umgebenden Hüllschicht,
wobei der mittlere Durchmesser der nanopartikulären Wirkstoffteilchen nach Redispergierung im Bereich von 0,05 bis 0,8 µm liegt.

2. Mittel nach Anspruch 1, in denen die Pflanzenschutz-Wirkstoffe eine Wasserlöslichkeit von weniger als 100 mg/l bei 25°C aufweisen.

3. Mittel nach Anspruch 1 oder 2, **dadurch gekennzeichnet, daß** es eine Hüllschicht (b) aus im wesentlichen Gelatine aufweist.

4. Mittel nach den Ansprüchen 1 bis 3, **dadurch gekennzeichnet, daß** es eine Hüllschicht (b) aus im wesentlichen einem Salz eines Phenolsulfonsäure-Harnstoff-Formaldehyd-Kondensats auf - weist.

5. Mittel nach den Ansprüchen 1 bis 4, **dadurch gekennzeichnet, daß** es weiterhin einen Stabilisator enthält.

6. Verfahren zur Bekämpfung von unerwünschtem Pflanzenwuchs, **dadurch gekennzeichnet, daß** man ein Mittel gemäß den Ansprüchen 1 bis 4, welches als Pflanzenschutz-Wirkstoff einen herbiziden Pflanzenschutz-Wirkstoff enthält, auf die Kulturpflanze, deren Lebensraum und/oder deren Saatgut einwirken läßt.

7. Verfahren zur Bekämpfung von Schadpilzen und tierischen Schädlingen, **dadurch gekennzeichnet, daß** man die Schadpilze oder die tierischen Schädlinge, deren Lebensraum oder die von ihnen freizuhaltenden Pflanzen, Flächen, Materialien oder Räume mit einem Mittel gemäß den Ansprüchen 1 bis 4, welches als Pflanzenschutz-Wirkstoff einen fungiziden Pflanzenschutz-Wirkstoff oder einen gegen tierische Schädlinge wirksamen Pflanzenschutz-Wirkstoff enthält, behandelt.

8. Verfahren zur Regulierung des Pflanzenwachstums, **dadurch gekennzeichnet, daß** man die Pflanzen, ihren Lebensraum und/oder ihre Samen mit einer regulativ wirksamen Menge eines Mittels gemäß den Ansprüchen 1 bis 4, welches als Pflanzenschutz-Wirkstoff einen wachstumsregulierend wirkenden Pflanzenschutz-Wirkstoff enthält, behandelt.

9. Verfahren zur Herstellung des Mittels gemäß Anspruch 1, **dadurch gekennzeichnet, daß** man eine flüssige Formulierung des Pflanzenschutz-Wirkstoffs mit einer flüssigen Formulierung eines Hüllmaterials mischt und den derart erhaltenen umhüllten Pflanzenschutz-Wirkstoff in an sich bekannter Weise weitgehend trocknet.

10. Verfahren nach Anspruch 7, **dadurch gekennzeichnet, daß** man den Pflanzenschutz-Wirkstoff unmittelbar vor dem Mischen aus einem seiner Salze freisetzt.

## Claims

1. A solid crop protection composition consisting essentially of
a) one or more predominantly amorphous solid crop protectants in nanoparticulate form having a solubility in water of less than 500 mg/l at 25°C and
b) a coating enclosing component (a),
where the average diameter of the nanoparticulate active ingredient particles is from 0.05 to 0.8 µm after redispersion.

2. A composition as claimed in claim 1, in which the solubility in water of the crop protectants is less than 100 mg/l at 25°C.

3. A composition as claimed in claim 1 or 2, which comprises a coating (b) consisting essentially of gelatin.

4. A composition as claimed in any of claims 1 to 3, which comprises a coating (b) consisting essentially of a salt of a phenolsulfonic acid/urea/formaldehyde condensate.

5. A composition as claimed in any of claims 1 to 4 which furthermore comprises a stabilizer.

6. A method of controlling undesirable vegetation, which comprises allowing a composition as claimed in any of claims 1 to 4, which comprises, as crop protectant, a herbicidal crop protectant, to act on the crop plant, its environment and/or its seed.

7. A method of controlling harmful fungi and pests, which comprises treating the harmful fungi or the pests, their environment, or the plants, areas, materials or spaces to kept free from them, with a composition as claimed in any of claims 1 to 4 which comprises, as crop protectant, a fungicidal crop protectant or a crop protectant which acts against pests.

8. A method of regulating the growth of plants, which comprises treating the plants, their environment and/or their seeds with a regulatory amount of a composition as claimed in any of claims 1 to 4 which comprises, as crop protectant, a growth-regulatory crop protectant.

9. A process for the preparation of the composition as claimed in claim 1, which comprises mixing a liquid formulation of the crop protectant with a liquid formulation of a coating material and essentially drying the resulting coated crop protectant in a manner known per se.

10. A method as claimed in claim 7, wherein the crop protectant is liberated from a salt thereof immediately prior to mixing.

## Revendications

1. Produit phytosanitaire solide, consistant pour l'essentiel en
a) une ou plusieurs substances phytosanitaires solides, principalement amorphes, sous forme de nanoparticules ayant une solubilité dans l'eau inférieure à 500 mg/l à 25°C et
b) une couche d'enrobage entourant le composant (a),
tandis que le diamètre moyen des particules de substance active en nanoparticules se situe après redispersion dans l'intervalle de 0,05 à 0,8 µm.

2. Produits selon la revendication 1, dans lesquels les substances à activité phytosanitaire présentent une solubilité dans l'eau inférieure à 100 mg/l à 25°C.

3. Produit selon la revendication 1 ou 2, **caractérisé par le fait qu'**il présente une couche d'enrobage (b) essentiellement composée de gélatine.

4. Produit selon les revendications 1 à 3, **caractérisé par le fait qu'**il présente une couche d'enrobage (b) en essentiellement un sel d'un condensat d'acide phénolsulfonique-urée-formaldéhyde.

5. Produit selon les revendications 1 à 4, **caractérisé par le fait qu'**il contient en outre un stabilisant.

6. Procédé pour la lutte contre la croissance indésirable des plantes, **caractérisé par le fait qu'**on fait agir un produit selon les revendications 1 à 4, qui contient comme substance à activité phytosanitaire une substance à activité phytosanitaire herbicide, sur les plantes cultivées, leur biotope et/ou leurs semences.

7. Procédé pour la lutte contre les champignons nuisibles et les parasites animaux, **caractérisé par le fait qu'**on traite les champignons nuisibles ou les parasites animaux, leur biotope ou les plantes, surfaces, matériaux ou espaces qui doivent en être exemptés, avec un produit selon les revendications 1 à 4, qui contient comme substance phytosanitaire une substance phytosanitaire fongicide ou une substance phytosanitaire active contre les parasites animaux.

8. Procédé pour la régulation de la croissance des plantes, **caractérisé par le fait qu'**on traite les plantes, leur biotope et/ou leurs semences avec une quantité à action régulatrice d'un produit selon les revendication 1 à 4, qui contient comme substance phytosanitaire une substance phytosanitaire à activité de régulation de croissance.

9. Procédé pour la préparation du produit selon la revendication 1, **caractérisé par le fait qu'**on mélange une formulation fluide de la substance à activité phytosanitaire avec une formulation fluide d'un matériau d'enrobage et on sèche fortement de manière connue en soi la substance active phytosanitaire enrobée ainsi obtenue.

10. Procédé selon la revendication 7, **caractérisé par le fait qu'**on libère la substance active phytosanitaire directement du mélange à partir de l'un de ses sels.
